# EUROPEAN PATENT APPLICATION

(11) **EP 3 785 994 A1**
(43) Date of publication of application: **03.03.2021**
(21) Application number: 19194354.7
(22) Date of filing: 29.08.2019
(51) Int. Cl.: B60R 1/00, G06K 9/00

(54) **A SYSTEM AND METHOD FOR HIGHLIGHTING OF AN OBJECT TO A VEHICLE OCCUPANT**

(71) Applicant: Ningbo Geely Automobile Research & Development Co. Ltd., Hangzhou Bay New District Ningbo 315336 (CN)
(72) Inventor: NILSSON, Magnus, 448 37 FLODA (SE); JOHANSSON, Jonathan, 417 14 GÖTEBORG (SE)
(74) Representative: Zacco Sweden AB

(57) **Abstract**

A system, method and computer program product for highlighting of an object to a vehicle occupant, the method comprising the step (S1) determining a presence of at least a first object (5a, 5b) in at least a first exterior view (ev1, ev2, ev3) obtained by a first exterior view camera (12a, 12b, 12c) and the step (S4) displaying at least a first highlight (hl1, hl2) of the at least first object (5a, 5b) in at least a first mirror display (30a, 30b, 30c), wherein the at least first mirror display (30a, 30b, 30c) is configured to provide a mirror view (mv1, mv2, vm3) and configured to display the at least first exterior view (ev1, ev2, ev3) of the at least a first exterior view camera (12a, 12b, 12c) that corresponds to the mirror view (mv1, mv2, vm3).

## Description

### TECHNICAL FIELD

The disclosure pertains to the field of support systems for providing visibility of the surroundings around a vehicle.

### BACKGROUND

It is desired for vehicle occupants to have a good visibility of the surroundings of the vehicle. Most vehicles today are equipped with windows that provide with views in a plurality of directions around the vehicle. It is also very common to use mirrors to provide with e.g. a rear view of the vehicle to the vehicle occupant via the mirror. Side mirrors of each side of the vehicle provides with rear views of each side of the vehicle. A rearview mirror, often mounted inside of the vehicle compartment, provides with a rear view of what is behind the vehicle. Modern vehicles are also often equipped with backup cameras to provide with a rear view on a display for a better view of what is behind the vehicle for the vehicle occupant when e.g. backing up the vehicle. Such backup camera is often automatically activated when the reverse gear of the vehicle is selected. The display to the backup camera is often mounted in the vehicle compartment to provide with the view of the backup camera for the vehicle occupant.

### SUMMARY

There is a demand for an easier and more convenient, intuitive way to be alerted about objects in the surroundings around a vehicle for the vehicle occupant. In particular there is a demand to get the vehicle occupant's attention to certain objects that are around the vehicle in an intuitive way. There are vehicles today with mirrors that can provide the vehicle occupant with mirror views around the vehicle and there are also display units in the vehicle that can provide a vehicle occupant with camera views around the vehicle. There is at the same time a desire to have an intuitive interaction with the surroundings and objects around the vehicle. So called back up cameras or parking assist cameras provides with a camera view, that is often a so called fish eye view, or wide angle view, that can be viewed by the vehicle occupant via a display unit inside of the vehicle. The display unit is often only used when e.g. backing up a vehicle, or when parking a vehicle. The camera view direction of such back up camera or parking assist camera is often static and pre-defined and presented to the vehicle occupant via a display in the vehicle compartment.

There is still a demand for using the ordinary mirrors of a vehicle, providing mirror views around the vehicle. Such ordinary mirrors are very simple for a human to understand and the views of objects in an ordinary mirror is often preferred before viewing an object of a display unit. At night, an ordinary mirror view is also preferred compare to a view in a display unit, since the display unit is a source of light that can disturb the vehicle occupant when driving in the dark.

The inventors have identified the desire for reviewing objects in an ordinary mirror but also the need for getting alerted about objects around the vehicle in an intuitive way.

An object of the present disclosure is to provide a system, method and computer program product for highlighting of an object to a vehicle occupant which seek to mitigate, alleviate, or eliminate one or more of the above-identified deficiencies in the art and disadvantages singly or in any combination.

The disclosure proposes a vehicle mirror display system for highlighting of an object to a vehicle occupant. The vehicle mirror display system comprises at least a first exterior view camera configured to obtain at least a first exterior view of at least a first object in the surroundings outside of the vehicle. The vehicle mirror display system further comprises at least a first mirror display configured to provide a mirror view and configured to display the at least a first exterior view of the at least first exterior view camera that corresponds to the mirror view and a processing circuitry operatively connected to the at least first exterior view camera, and the at least first mirror display. The processing circuitry is configured to cause the vehicle mirror display system to determine a presence of the at least first object in the at least first exterior view obtained by the at least first exterior view camera and display at least a first highlight of the at least first object in the at least first mirror display. An advantage with the mirror display system is that the vehicle occupant can maintain the attention to the surroundings provided by the mirror view of the mirror display and without losing the attention to the surroundings of the vehicle, get alerted about an object that is visible in the mirror view of the mirror display. The ordinary traditional mirror has hence become smarter by adding the feature of highlighting of an object visible in the mirror view of the mirror display.

According to an aspect the at least first mirror display comprises a mirror part and a display part, wherein the display part is configured to display the at least a first highlight of the at least a first object for generating a visual effect that can be seen by the vehicle occupant through the mirror part of the at least first mirror display. In other words, the mirror display functions as an ordinary mirror, and when an object is highlighted, the display part of the mirror provides with an visual effect that is visible to the vehicle occupant, while the vehicle occupant can maintain attention to the object provided by the mirror view.

According to an aspect the vehicle mirror display system further comprises at least a first interior view camera operatively connected to the processing circuitry configured to obtain at least a first interior view of the vehicle occupant inside of the vehicle. The processing circuitry is further configured to cause vehicle mirror display system to obtain, by the least a first interior view camera, at least a first interior view of the face and/or the head of the vehicle occupant and determine, based on the at least first interior view of the face and/or the head of the vehicle occupant, the position where the vehicle occupant is located in relation to the at least first mirror display. The processing circuitry is further configured to cause vehicle mirror display system to determine, based on the position where the vehicle occupant is located in relation to the at least first mirror display, the appearance of the at least first object in the mirror part of the at least first mirror display and display the at least first highlight of the at least first object at an area in the display part of the at least first mirror display that is associated with the appearance of the at least a first object in the mirror part of the at least first mirror display. In other words, the interior view camera monitors the face and/or the head of the vehicle occupant in order to provide the highlight of the object at an area in the display part that is correlated with the mirror view of the object as seen in the mirror.

According to an aspect the processing circuitry is further configured to cause vehicle mirror display system to determine the presence of the at least first object using object recognition of identified objects in the at least first exterior view. This means that predetermined objects of interest can be highlighted by applying object recognition of objects detected by the exterior view camera and only highlight objects of interest.

According to an aspect the processing circuitry is further configured to cause vehicle mirror display system to determine the presence of the at least first object by determining a relative movement of identified objects in the at least first exterior view. An advantage with this aspect is that a moving object, e.g. a human or another vehicle can be highlighted to the vehicle occupant.

According to an aspect the processing circuitry is further configured to cause the vehicle mirror display system to determine the presence of the at least first object by determining a relative distance of identified objects in the at least first exterior view. This means that objects that are closer than a certain distance from the vehicle can be highlighted, this can be of particular interest when driving when it is dark or when the weather conditions are not providing with a clear view, or when blinded by the sun or other light source.

According to an aspect the at least first highlight is at least any of an outline of the at least first object, an icon of the at least first object and an image of the at least first object. This means for example that the vehicle occupant can be alerted about the object and e.g. get further information about the object that can be used for decision making by the vehicle occupant.

According to an aspect the at least first highlight is visualized in different colors dependent on at least any of a distance to the at least first object, a classification of the at least first object and a relative movement of the at least first object. This gives the vehicle occupant a further understanding of a relative seriousness of the object.

According to an aspect the the at least first highlight further comprising a text associated with the at least first object. The advantage with displaying a text is that the object can be described further and the vehicle occupant can e.g. be provided with a suggested action.

The disclosure further proposes a method for highlighting of an object to a vehicle occupant. The method comprising the step of determining a presence of at least a first object in at least a first exterior view obtained by a first exterior view camera and the step of displaying at least a first highlight of the at least first object in at least a first mirror display, wherein the at least first mirror display is configured to provide a mirror view and configured to display the at least first exterior view of the at least a first exterior view camera that corresponds to the mirror view. An advantage with the mirror display system is that the vehicle occupant can maintain the attention to the surroundings provided by the mirror view of the mirror display and without losing the attention to the surroundings of the vehicle, get alerted about an object that is visible in the mirror view of the mirror display. The ordinary traditional mirror has hence become smarter by adding the feature of highlighting an object visible in the mirror view of the mirror display.

According to an aspect the method further comprising the step of obtaining, by at least a first interior view camera, at least a first interior view of the face and/or the head of the vehicle occupant and the step of determining, based on the at least first interior view of the face and/or the head of the vehicle occupant, the position where the vehicle occupant is located in relation to the at least first mirror display. This means that it can be determined what mirror view the vehicle occupant can see in the mirror display.

According to an aspect the method further comprising the step of determining, based on the position where the vehicle occupant is located in relation to the at least first mirror display, the appearance of the at least first object in a mirror part of the at least first mirror display and the step of displaying the at least first highlight of the at least first object at an area in a display part of the at least first mirror display that is associated with the appearance of the at least a first object in the mirror part of the at least first mirror display. In other words, vehicle occupant will experience the highlight of the object at an area in the display part that is correlated with the mirror view of the object as seen in the mirror.

According to an aspect the method further comprising the step of generating a visual effect that can be seen by the vehicle occupant through a mirror part of the at least first mirror display. According to an aspect the at least first mirror display comprises a mirror part and a display part, wherein the display part is configured to display the at least first highlight of the at least a first object for generating a visual effect that can be seen by the vehicle occupant through the mirror part of the at least first mirror display. In other words, the mirror display functions as an ordinary mirror, and when an object is highlighted, the display part of the mirror display provides with an visual effect that is visible to the vehicle occupant, while the vehicle occupant can maintain attention to the object provided by the mirror view.

According to an aspect the method further comprising the step of determining the presence of the at least first object using object recognition of identified objects in the at least first exterior view. This means that predetermined objects of interest can be highlighted by applying object recognition of objects detected by the exterior view camera and only highlight objects of interest and not highlighting any object.

The disclosure further proposes a computer program product comprising a non-transitory computer readable medium, having thereon a computer program comprising program instructions, the computer program being loadable into a processing circuitry and configured to cause execution of the method when the computer program is run by the at least one processing circuitry.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
Figure 1a illustrates an overview of the vehicle mirror display system according to an aspect of the disclosure.
Figure 1b illustrates exterior views of exterior view cameras and mirror views of mirrors of the vehicle mirror display system according to an aspect of the disclosure.
Figure 2a illustrates the mirror part and the display part of a mirror display according to an aspect of the disclosure.
Figure 2b illustrates the mirror display when highlighting an object according to an aspect of the disclosure.
Figure 2c illustrates the mirror part and the display part of a mirror display according to an aspect of the disclosure.
Figure 2d illustrates the mirror display when highlighting an object together with a text according to an aspect of the disclosure.
Figure 3 illustrates an example views in a rear view mirror display and a side view mirror display according to an aspect of the disclosure.

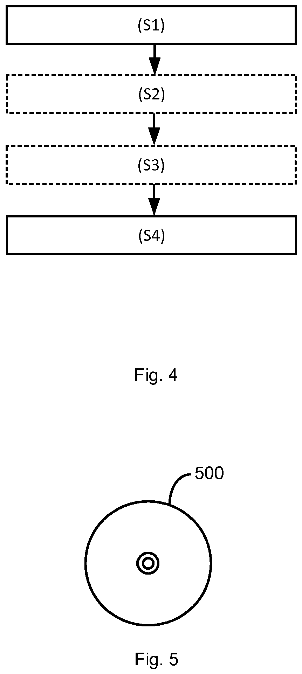

Figure 4 illustrates a flow chart of the method steps according to some aspects of the disclosure.
Figure 5 illustrates a computer program product according to some aspects of the disclosure.

### DETAILED DESCRIPTION

Aspects of the present disclosure will be described more fully hereinafter with reference to the accompanying drawings. The method and device disclosed herein can, however, be realized in many different forms and should not be construed as being limited to the aspects set forth herein. Like numbers in the drawings refer to like elements throughout.

The terminology used herein is for the purpose of describing particular aspects of the disclosure only, and is not intended to limit the disclosure. As used herein, the singular forms "a", "an" and "the" are intended to include the plural forms as well, unless the context clearly indicates otherwise.

In some implementations and according to some aspects of the disclosure, the functions or steps noted in the blocks can occur out of the order noted in the operational illustrations. For example, two blocks shown in succession can in fact be executed substantially concurrently or the blocks can sometimes be executed in the reverse order, depending upon the functionality/acts involved.

In the drawings and specification, there have been disclosed exemplary aspects of the disclosure. However, many variations and modifications can be made to these aspects without substantially departing from the principles of the present disclosure. Thus, the disclosure should be regarded as illustrative rather than restrictive, and not as being limited to the particular aspects discussed above. Accordingly, although specific terms are employed, they are used in a generic and descriptive sense only and not for purposes of limitation.

It should be noted that the word "comprising" does not necessarily exclude the presence of other elements or steps than those listed. It should further be noted that any reference signs do not limit the scope of the claims, that the example embodiments may be implemented at least in part by means of both hardware and software, and that several "means", "units" or "devices" may be represented by the same item of hardware.

There is a demand for using the ordinary mirrors, providing mirror views around the vehicle. Such ordinary mirrors are very simple for a human to understand and the views of objects in an ordinary mirror is often preferred before viewing an object of a display unit. At night, an ordinary mirror is also preferred compare to a display unit, since the display unit is a source of light that can disturb the vehicle occupant when driving in the dark.

The inventors have identified the desire for reviewing objects in an ordinary mirror but also the need for getting alerted about objects around the vehicle in an intuitive way.

An object of the present disclosure is to provide a system, method and computer program product for highlighting of an object to a vehicle occupant which seek to mitigate, alleviate, or eliminate one or more of the above-identified deficiencies in the art and disadvantages singly or in any combination.

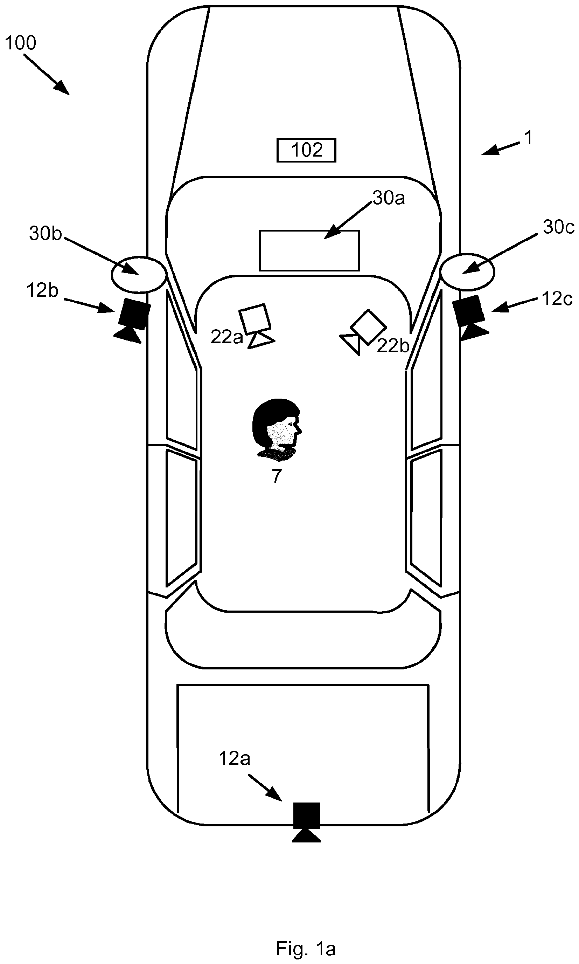

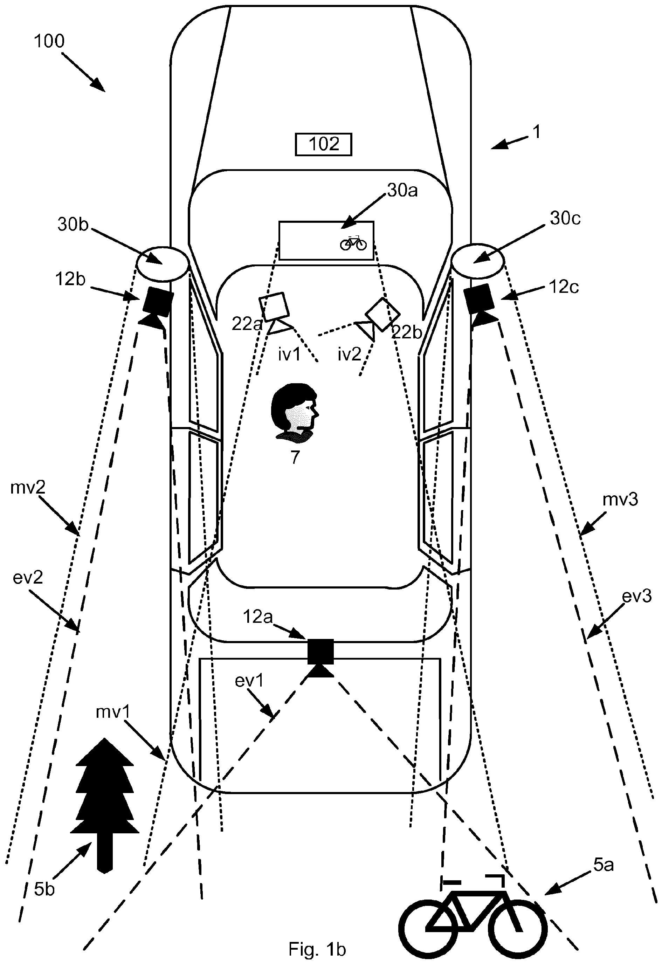

The disclosure proposes a vehicle mirror display system 100, illustrated in figure 1a and figure 1b, for highlighting of an object to a vehicle occupant. The vehicle mirror display system 100 comprises at least a first exterior view camera 12a, 12b, 12c configured to obtain at least a first exterior view ev1, ev2, ev3 of at least a first object 5a, 5b in the surroundings outside of the vehicle 1, for example as illustrated in figure 1b. In an example the at least first exterior view camera 12a, 12b, 12c is mounted on the outside or on the inside of the vehicle. According to an aspect the at least first exterior view camera 12a, 12b, 12c is integrated into the body of the vehicle. The at least first exterior view camera 12a, 12b, 12c obtains at least a first exterior view ev1, ev2, ev3 of the surroundings outside of the vehicle 1. According to an aspect the the vehicle mirror display system 100 comprises a combination of different exterior view cameras 12a, 12b, 12c configured to obtain at least a first exterior view ev1, ev2, ev3 of at least a first object 5a, 5b in the surroundings outside of the vehicle 1.

According to an aspect the at least first exterior view camera 12a, 12b, 12c is configured to obtain at least a first exterior view ev1, ev2, ev3 of at least a first object 5a, 5b in the surroundings outside of the vehicle 1 using a camera sensor that is sensitive to visible light and/or non visible light. According to an aspect the at least first exterior view camera 12a, 12b, 12c is configured to be sensitive to light with a certain wave length. According to an aspect a light emitter device is used together with the at least first exterior view camera 12a, 12b, 12c for obtaining at least a first exterior view ev1, ev2, ev3 of at least a first object 5a, 5b in the surroundings outside of the vehicle 1 when the light is not sufficient. According to an aspect the at least first exterior view camera 12a, 12b, 12c is configured to obtain at least a first exterior view ev1, ev2, ev3 of at least a first object 5a, 5b in the surroundings outside of the vehicle 1 using a sensor that is sensitive to the temperature of the at least first object 5a, 5b.

According to an aspect the vehicle mirror display system 100 further comprises at least a first object detection device configured to detect at least a first object 5a, 5b in the surroundings outside of the vehicle 1. According to an aspect the at least first object detection device is configured to obtain at least a first exterior view ev1, ev2, ev3 of at least a first object 5a, 5b in the surroundings outside of the vehicle 1. According to an aspect the at least first exterior view camera 12a, 12b, 12c is operatively connected to the at least first object detection device, and the at least first exterior view camera 12a, 12b, 12c and the at least first object detection device are configured to obtain at least a first exterior view ev1, ev2, ev3 of at least a first object 5a, 5b in the surroundings outside of the vehicle 1. According to an aspect the at least first object detection device is any of a Radar device, a Lidar device and a sonar device. In an example the at least first exterior view camera 12a, 12b, 12c is operatively connected to an existing Radar device, Lidar device and/or sonar device of the vehicle.

According to an aspect the at least a first mirror display 30a, 30b, 30c is at least any of a rear view mirror display 30a and a side view mirror display 30b, 30c of a vehicle as illustrated in figure 1a and figure 1b. The mirror view mv1, mv2, vm3 provided by the at least a first mirror display 30a, 30b, 30c is the view as seen by the vehicle occupant when looking at the at least a first mirror display 30a, 30b, 30c.

In the example as illustrated in figure 1b, the external view camera 12b obtains an exterior view ev2 of an object 5b in form of a tree that is behind the vehicle 1 on the left hand side. Further in the example as illustrated in figure 1b, the external view camera 12a and the external view camera 12c both obtains an exterior views ev1, ev3 of an object 5a in form of a bike that is behind the vehicle 1 on the right hand side.

The vehicle mirror display system 100 further comprises at least a first mirror display 30a, 30b, 30c configured to provide a mirror view mv1, mv2, vm3. In the example as illustrated in figure 1b, mirror display 30b provides a mirror view mv2 of an object 5b in form of a tree that is behind the vehicle 1 on the left hand side. Further in the example as illustrated in figure 1b, the mirror display 30a and the mirror display 30c both provides mirror views mv1, mv2 of an object 5a in form of a bike that is behind the vehicle 1 on the right hand side.

The at least a first mirror display 30a, 30b, 30c is further configured to display the at least a first exterior view ev1, ev2, ev3 of the at least first exterior view camera 12a, 12b, 12c that corresponds to the mirror view mv1, mv2, vm3. The vehicle mirror display system 100 further comprises a processing circuitry 102 operatively connected to the at least first exterior view camera 12a, 12b, 12c, and the at least first mirror display 30a, 30b, 30c. According to an aspect the processing circuitry 102 is the processing circuitry of an on-board vehicle computer. According to an aspect the processing circuitry 102 is a processing circuitry comprised in an electronic device connected to the vehicle mirror display system 100 via a wireless communication network. According to an aspect the processing circuitry 102 is operatively connected to a memory for storing and managing data. According to an aspect the memory is the memory of an on-board vehicle computer. According to an aspect the memory is comprised in an electronic device connected to the vehicle mirror display system 100 via a wireless communication network.

The processing circuitry 102 is configured to cause the vehicle mirror display system 100 to determine a presence of the at least first object 5a, 5b in the at least first exterior view ev1, ev2, ev3 obtained by the at least first exterior view camera 12a, 12b, 12c and display at least a first highlight hl1, hl2 of the at least first object 5a, 5b in the at least first mirror display 30a, 30b, 30c. According to an aspect only the at least first object 5a, 5b, provided by the at least first exterior view camera 12a, 12b, 12c, is displayed in the at least a first mirror display 30a, 30b, 30c. According to an aspect only the at least first highlight hl1, hl2 of the at least first object 5a, 5b is displayed in the at least first mirror display 30a, 30b, 30c. This means that the vehicle occupant viewing the mirror display 30a, 30b, 30c can see the object 5a, 5b in the mirror view mv1, mv2, vm3 together with the at least first highlight hl1, hl2 of the at least first object 5a, 5b when looking at the mirror display 30a, 30b, 30c. The vehicle occupant can hence monitor the object 5a, 5b as seen in the mirror view mv1, mv2, mv3 but can get alerted by the at least first highlight hl1, hl2 of the object 5a, 5b and can pay some extra attention to the object 5a, 5b. An advantage with the mirror display system is that the vehicle occupant can maintain the attention to the surroundings provided by the mirror view mv1, mv2, vm3 of the mirror display 30a, 30b, 30c and without losing the attention to the surroundings of the vehicle, get alerted about an object 5a, 5b that is visible in the mirror view of the mirror display 30a, 30b, 30c. The ordinary traditional mirror has hence become smarter by adding the feature of highlighting an object visible in the mirror view of the mirror display 30a, 30b, 30c.

According to an aspect, the at least first mirror display 30a, 30b, 30c comprises a mirror part 31a, 31b, 31c and a display part 32a, 32b, 32c wherein the display part 32a, 32b, 32c is configured to display the at least a first highlight hl1, hl2 of the at least a first object 5a, 5b for generating a visual effect that can be seen by the vehicle occupant 7 through the mirror part 31a, 31b, 31c of the at least first mirror display 30a, 30b, 30c.

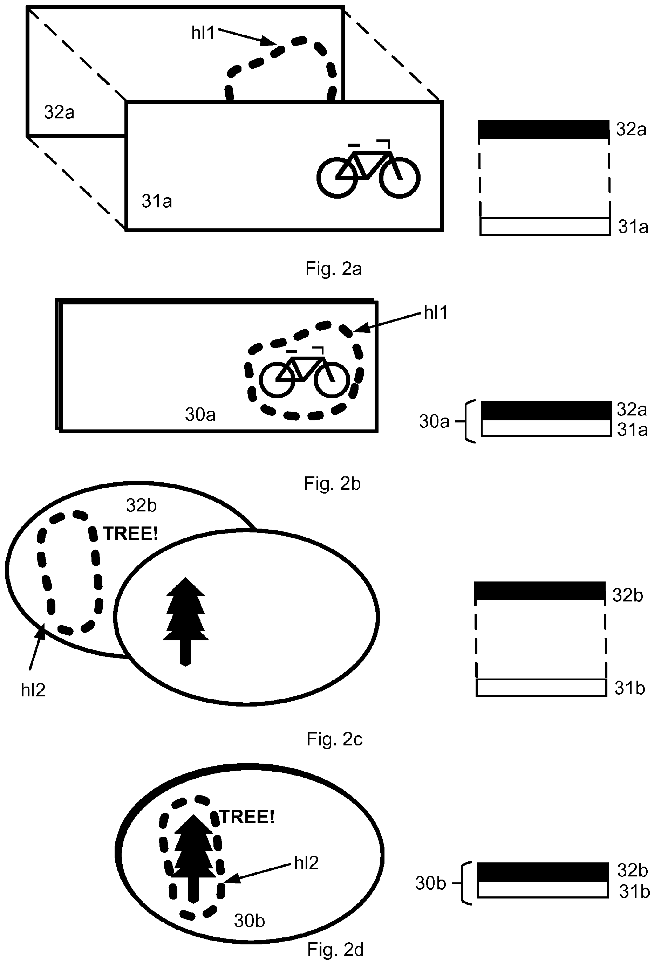

According to an aspect, as illustrated in the figures 2a-b and the figures 2c-d, the at least first mirror display 30a, 30b, 30c comprises a mirror part 31a, 31b, 31c and a display part 32a, 32b, 32c.

The example mirror display in figure 2a, illustrates the mirror part 31a with a bike as seen in the mirror view mv1 of the rear view mirror display 30a as illustrated in figure 1b. The example mirror display in figure 2a, illustrates the display part 32a with a highlight hl1 intended to highlight the bike as seen in the mirror view mv1 of the rear view mirror display 30a. In figure 2a the a highlight hl1 is illustrated with a dotted line. The dotted line in figure 2a could for example be the silhouette outline of the bike as captured by the exterior view camera 12a as illustrated in figure 1b. According to an aspect the highlight hl1 intended to highlight the object 5a as seen in the mirror view mv1 is an image of the object 5a obtained by the external view camera 12a, 12c. In the illustration in figure 2b the mirror part 31a and the display part 32a together forms the mirror display 30a. In the example as illustrated in figure 2b the bike is highlighted with a blinking silhouette outline of the bike.

In other words, the mirror display 30a, 30b, 30c functions as an ordinary mirror, and when an object is highlighted, the display part 32a, 32b, 32c of the mirror display 30a, 30b, 30c provides with an visual effect that is visible to the vehicle occupant, while the vehicle occupant can maintain attention to the object provided by the mirror view mv1, mv2, vm3.

According to an aspect the vehicle mirror display system 100 further comprises at least a first interior view camera 22a, 22b operatively connected to the processing circuitry 102 configured to obtain at least a first interior view iv1, iv2 of the vehicle occupant 7 inside of the vehicle 1. The processing circuitry 102 is further configured to cause vehicle mirror display system 100 to obtain, by the least a first interior view camera 22a, 22b, at least a first interior view iv1, iv2 of the face and/or the head of the vehicle occupant 7 and determine, based on the at least first interior view iv1, iv2 of the face and/or the head of the vehicle occupant 7, the position where the vehicle occupant 7 is located in relation to the at least first mirror display 30a, 30b, 30c.

In the example as illustrated in figure 1a, a first interior view camera 22a and a second interior view camera 22b are mounted in front of the vehicle occupant 7 in order to obtain a first interior view iv1 and a second interior view iv2 of the vehicle occupant 7, as illustrated in figure 1b. In an example at least a first interior view camera 22a and at least a second interior view camera 22b are mounted to provide at least a first interior view iv1 and at least a second interior view iv2 of the vehicle occupant 7 from different of angles around the vehicle occupant 7. According to an aspect the at least first interior view camera 22a, 22b is configured to perform image processing of the captured images of the vehicle occupant 7. According to an aspect the at least first interior view camera 22a, 22b is configured to detect at least one of the face and the eyes of the vehicle occupant 7.

The processing circuitry 102 is operatively connected to the at least first exterior view camera12a, 12b, 12c, the at least first interior camera 22a, 22b and at least first mirror display 30a, 30b, 30c. The processing circuitry 102 is configured to cause the vehicle mirror display system 100 to obtain, by the least a first interior view camera 22a, 22b, at least a first interior view iv1, iv2 of the face and/or the head of the vehicle occupant 7 and determine, based on the at least first interior view iv1, iv2, at least any of a gaze direction and head direction of the vehicle occupant 7 for understanding the position where the vehicle occupant is looking and determine the position where the vehicle occupant 7 is located in relation to the at least first mirror display 30a, 30b, 30c. According to an aspect the position of the at least first interior camera 22a, 22b in relation to the vehicle 1 is used for determining a relative gaze direction and head direction of the vehicle occupant 7 in relation to the vehicle 1 for determining the position where the vehicle occupant 7 is located in relation to the at least first mirror display 30a, 30b, 30c. According to an aspect, the at least first interior camera 22a, 22b is mounted in a certain direction towards the vehicle occupant 7 and coordinates of the position of the face and/or eyes of the vehicle occupant 7 is compared with coordinates of the position of the at least first interior camera 22a, 22b. According to an aspect the at least first interior view camera 22a, 22b is configured to detect at least one of the face and the eyes of the vehicle occupant 7 for determining the gaze direction and/or head direction of the vehicle occupant 5 for determining the position where the vehicle occupant 7 is located in relation to the at least first mirror display 30a, 30b, 30c.

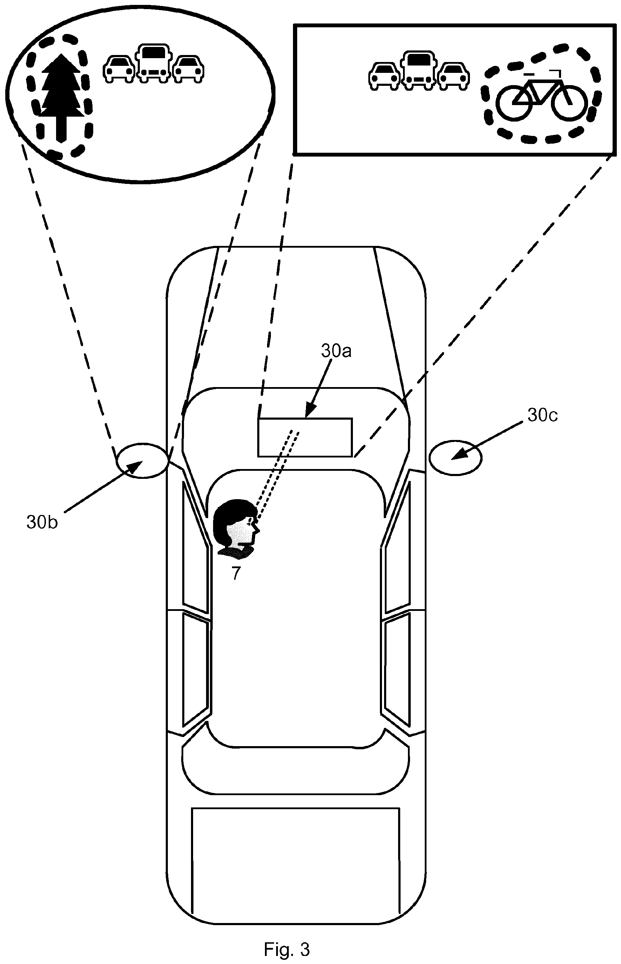

The processing circuitry 102 is further configured to cause vehicle mirror display system 100 to determine, based on the position where the vehicle occupant 7 is located in relation to the at least first mirror display 30a, 30b, 30c, the appearance of the at least first object 5a, 5b in the mirror part 31a, 31b, 31c of the at least first mirror display 30a, 30b, 30c and display the at least first highlight hl1, hl2 of the at least first object 5a, 5b at an area in the display part 32a, 32b, 32c of the at least first mirror display 30a, 30b, 30c that is associated with the appearance of the at least a first object 5a, 5b in the mirror part 31a, 31b, 31c of the at least first mirror display 30a, 30b, 30c. In other words, the interior view camera 22a, 22b monitors the face and/or the head of the vehicle occupant 7 in order to provide the highlight hl1, hl2 of the object 5a, 5b at an area in the display part 32a, 32b, 32c that is correlated with the mirror view mv1, mv2, vm3 of the object 5a, 5b as seen in the mirror. In the example as illustrated in figure 3, the vehicle occupant 7 is alerted with highlight of the different objects that determined to present in respective exterior view ev1, ev2, ev3 obtained by the respective exterior view camera 12a, 12b, 12c. In the example in figure 3, the traffic can be seen in the mirror view mv1, mv2 provided by the respective mirror display 30a, 30b. In the example in figure 3 it the traffic is not determined to be an object of interest and is therefore not highlighted.

According to an aspect the processing circuitry 102 is further configured to cause the vehicle mirror display system 100 to determine the presence of the at least first object 5a, 5b using object recognition of identified objects in the at least first exterior view ev1, ev2, ev3. This means that predetermined objects of interest can be highlighted by applying object recognition of objects detected by the exterior view camera 12a, 12b, 12c and only highlight objects of interest and not highlighting any object. In the example in figure 1b, the bike is a predetermined object of interest that is highlighted to the vehicle occupant 7 as illustrated in the mirror display 30a as seen in the illustration in figure 2b.

According to an aspect the processing circuitry 102 is further configured to cause vehicle mirror display system 100 to determine the presence of the at least first object 5a, 5b by determining a relative movement of identified objects in the at least first exterior view ev1, ev2, ev3. An advantage with this aspect is that a moving object, e.g. a human or another vehicle can be highlighted to the vehicle occupant. According to an aspect the relative movement of an identified object is determined by using at least any of a movement sensor, image processing, object recognition, an externa sensor such as a LIDAR or a radar sensor.

According to an aspect the processing circuitry 102 is further configured to cause the vehicle mirror display system 100 to determine the presence of the at least first object 5a, 5b by determining a relative distance of identified objects in the at least first exterior view ev1, ev2, ev3. This means that objects that are closer than a certain distance from the vehicle can be highlighted, this can be of particular interest when driving when it is dark or when the weather conditions are not providing with a clear view, or when the vehicle occupant 7 is blinded by the sun or other light source.

According to an aspect the at least first highlight hl1, hl2 is at least any of an outline of the at least first object 5a, 5b, an icon of the at least first object 5a, 5b and an image of the at least first object 5a, 5b. This means for example that the vehicle occupant can be alerted about the object 5a, 5b and e.g. get further information about the object 5a, 5b that can be used for decision making by the vehicle occupant. In an example, an icon may be used for a categorization of the object 5a, 5b. In an example an image, e.g. an enlarged image of the object 5a, 5b is used for highlighting the object 5a, 5b.

According to an aspect the at least first highlight hl1, hl2 is visualized in different colors dependent on at least any of a distance to the at least first object 5a, 5b, a classification of the at least first object 5a, 5b and a relative movement of the at least first object 5a, 5b. This gives the vehicle occupant a further understanding of a relative seriousness of the object 5a, 5b. In an example, a short distance to the object 5a, 5b is illustrated with a red color, and long distance is illustrated with a green color.

According to an aspect the the at least first highlight hl1, hl2 further comprising a text associated with the at least first object 5a, 5b. The advantage with displaying a text is that the object can be described further and the vehicle occupant can e.g. be provided with a suggested action. In an example a text describing that the object 5a, 5b is "grass" may cause the vehicle occupant 7 to take a different decision when driving the vehicle 1 compare to if the text "tree" or "stone" is used to describe the object. In the example as illustrated in figure 2c and figure 2d, a text is used together with an outline of the tree as a the highlight hl2 as seen by the vehicle occupant 7 when viewing the mirror display 30b.

The disclosure further proposes a method for highlighting of an object to a vehicle occupant. The method comprising the step of S1 determining a presence of at least a first object 5a, 5b in at least a first exterior view ev1, ev2, ev3 obtained by a first exterior view camera 12a, 12b, 12c and the step of S4 displaying at least a first highlight hl1, hl2 of the at least first object 5a, 5b in at least a first mirror display 30a, 30b, 30c, wherein the at least first mirror display 30a, 30b, 30c is configured to provide a mirror view mv1, mv2, vm3 and configured to display the at least first exterior view ev1, ev2, ev3 of the at least a first exterior view camera 12a, 12b, 12c that corresponds to the mirror view mv1, mv2, vm3. According to an aspect the method further comprising the step of displaying at least a first highlight hl1, hl2 of the at least first object 5a, 5b in at least a first mirror display 30a, 30b, 30c at a position that corresponds to the mirror view mv1, mv2, vm3 of the at least a first object 5a, 5b in the at least first mirror display 30a, 30b, 30c. An advantage with the mirror display system is that the vehicle occupant can maintain the attention to the surroundings provided by the mirror view of the mirror display 30a, 30b, 30c and without losing the attention to the surroundings of the vehicle, get alerted about an object that is visible in the mirror view of the mirror display 30a, 30b, 30c. The ordinary traditional mirror has hence become smarter by adding the feature of highlighting an object visible in the mirror view of the mirror display 30a, 30b, 30c.

According to an aspect the method further comprising the step of S2 obtaining, by at least a first interior view camera 22a, 22b, at least a first interior view iv1, iv2 of the face and/or the head of the vehicle occupant 7 and the step of S3 determining, based on the at least first interior view iv1, iv2 of the face and/or the head of the vehicle occupant 7, the position where the vehicle occupant 7 is located in relation to the at least first mirror display 30a, 30b, 30c. This means that it can be determined what mirror view mv1, mv2, mv3 the vehicle occupant can see in the mirror display 30a, 30b, 30c.

According to an aspect the method further comprising the step of determining, based on the position where the vehicle occupant 7 is located in relation to the at least first mirror display 30a, 30b, 30c, the appearance of the at least first object 5a, 5b in a mirror part 31a, 31b, 31c of the at least first mirror display 30a, 30b, 30c and the step of displaying the at least first highlight hl1, hl2 of the at least first object 5a, 5b at an area in a display part 32a, 32b, 32c of the at least first mirror display 30a, 30b, 30c that is associated with the appearance of the at least a first object 5a, 5b in the mirror part 31a, 31b, 31c of the at least first mirror display 30a, 30b, 30c. In other words, vehicle occupant 7 will experience the highlight hl1, hl2 of the object 5a, 5b at an area in the display part 32a, 32b, 32c that is correlated with the mirror view mv1, mv2, vm3 of the object 5a, 5b as seen in the mirror.

According to an aspect the method further comprising the step of generating a visual effect that can be seen by the vehicle occupant 7 through a mirror part 31a, 31b, 31c of the at least first mirror display 30a, 30b, 30c. According to an aspect the at least first mirror display 30a, 30b, 30c comprises a mirror part 31a, 31b, 31c and a display part 32a, 32b, 32c, wherein the display part 32a, 32b, 32c is configured to display the at least first highlight hl1, hl2 of the at least a first object 5a, 5b for generating a visual effect that can be seen by the vehicle occupant 7 through the mirror part 31a, 31b, 31c of the at least first mirror display 30a, 30b, 30c. In other words, the mirror display 30a, 30b, 30c functions as an ordinary mirror, and when an object is highlighted, the display part 32a, 32b, 32c of the mirror display 30a, 30b, 30c provides with an visual effect that is visible to the vehicle occupant, while the vehicle occupant can maintain attention to the object provided by the mirror view mv1, mv2, vm3.

According to an aspect the method further comprising the step of determining the presence of the at least first object 5a, 5b using object recognition of identified objects in the at least first exterior view ev1, ev2, ev3.. This means that predetermined objects of interest can be highlighted by applying object recognition of objects detected by the exterior view camera 12a, 12b, 12c and only highlight objects of interest and not highlighting any object.

The disclosure further proposes a computer program product comprising a non-transitory computer readable medium, having thereon a computer program comprising program instructions, the computer program being loadable into a processing circuitry and configured to cause execution of the method when the computer program is run by the at least one processing circuitry.

## Claims

1. A vehicle mirror display system (100) for highlighting of an object to a vehicle occupant, the vehicle mirror display system (100) comprises:
• at least a first exterior view camera (12a, 12b, 12c) configured to obtain at least a first exterior view (ev1, ev2, ev3) of at least a first object (5a, 5b) in the surroundings outside of the vehicle (1);
• at least a first mirror display (30a, 30b, 30c) configured to provide a mirror view (mvl, mv2, vm3) and configured to display the at least a first exterior view (ev1, ev2, ev3) of the at least first exterior view camera (12a, 12b, 12c) that corresponds to the mirror view (mvl, mv2, vm3) and
• a processing circuitry (102) operatively connected to the at least first exterior view camera (12a, 12b, 12c), and the at least first mirror display (30a, 30b, 30c), configured to cause the vehicle mirror display system (100) to:
- determine a presence of the at least first object (5a, 5b) in the at least first exterior view (ev1, ev2, ev3) obtained by the at least first exterior view camera (12a, 12b, 12c); and
- display at least a first highlight (hl1, hl2) of the at least first object (5a, 5b) in the at least first mirror display (30a, 30b, 30c).

2. The vehicle mirror display system (100) according to claim 1, wherein the at least first mirror display (30a, 30b, 30c) comprises a mirror part (31a, 31b, 31c) and a display part (32a, 32b, 32c), wherein the display part (32a, 32b, 32c) is configured to display the at least a first highlight (hl1, hl2) of the at least a first object (5a, 5b) for generating a visual effect that can be seen by the vehicle occupant (7) through the mirror part (31a, 31b, 31c) of the at least first mirror display (30a, 30b, 30c).

3. The vehicle mirror display system (100) according to any of the preceding claims, wherein the vehicle mirror display system (100) further comprises:
• at least a first interior view camera (22a, 22b) operatively connected to the processing circuitry (102) and configured to obtain at least a first interior view (iv1, iv2) of the vehicle occupant (7) inside of the vehicle (1), and wherein the processing circuitry (102) is further configured to cause vehicle mirror display system (100) to:
- obtain, by the least a first interior view camera (22a, 22b), at least a first interior view (iv1, iv2) of the face and/or the head of the vehicle occupant (7);
- determine, based on the at least first interior view (iv1, iv2) of the face and/or the head of the vehicle occupant (7), the position where the vehicle occupant (7) is located in relation to the at least first mirror display (30a, 30b, 30c);
- determine, based on the position where the vehicle occupant (7) is located in relation to the at least first mirror display (30a, 30b, 30c), the appearance of the at least first object (5a, 5b) in the mirror part (31a, 31b, 31c) of the at least first mirror display (30a, 30b, 30c); and
- display the at least first highlight (hl1, hl2) of the at least first object (5a, 5b) at an area in the display part (32a, 32b, 32c) of the at least first mirror display (30a, 30b, 30c) that is associated with the appearance of the at least a first object (5a, 5b) in the mirror part (31a, 31b, 31c) of the at least first mirror display (30a, 30b, 30c).

4. The vehicle mirror display system (100) according to any of the preceding claims, wherein the processing circuitry (102) is further configured to cause vehicle mirror display system (100) to:
- determine the presence of the at least first object (5a, 5b) using object recognition of identified objects in the at least first exterior view (ev1, ev2, ev3).

5. The vehicle mirror display system (100) according to any of the preceding claims, wherein the processing circuitry (102) is further configured to cause vehicle mirror display system (100) to:
- determine the presence of the at least first object (5a, 5b) by determining a relative movement of identified objects in the at least first exterior view (ev1, ev2, ev3).

6. The vehicle mirror display system (100) according to any of the preceding claims, wherein the processing circuitry (102) is further configured to cause vehicle mirror display system (100) to:
- determine the presence of the at least first object (5a, 5b) by determining a relative distance of identified objects in the at least first exterior view (ev1, ev2, ev3).

7. The vehicle mirror display system (100) according to any of the preceding claims, wherein the at least first highlight (hl1, hl2) is at least any of an outline of the at least first object (5a, 5b); an icon of the at least first object (5a, 5b) and an image of the at least first object (5a, 5b).

8. The vehicle mirror display system (100) according to any of the preceding claims, wherein the at least first highlight (hl1, hl2) is visualized in different colors dependent on at least any of a distance to the at least first object (5a, 5b); a classification of the at least first object (5a, 5b) and a relative movement of the at least first object (5a, 5b).

9. The vehicle mirror display system (100) according to any of the preceding claims, wherein the at least first highlight (hl1, hl2) further comprising a text associated with the at least first object (5a, 5b).

10. A method for highlighting of an object to a vehicle occupant, the method comprising:
- (S1) determining a presence of at least a first object (5a, 5b) in at least a first exterior view (ev1, ev2, ev3) obtained by a first exterior view camera (12a, 12b, 12c); and
- (S4) displaying at least a first highlight (hl1, hl2) of the at least first object (5a, 5b) in at least a first mirror display (30a, 30b, 30c), wherein the at least first mirror display (30a, 30b, 30c) is configured to provide a mirror view (mvl, mv2, vm3) and configured to display the at least first exterior view (ev1, ev2, ev3) of the at least first exterior view camera (12a, 12b, 12c) that corresponds to the mirror view (mvl, mv2, vm3).

11. The method according to claim 10, the method further comprising:
- (S2) obtaining, by at least a first interior view camera (22a, 22b), at least a first interior view (iv1, iv2) of the face and/or the head of the vehicle occupant (7); and
- (S3) determining, based on the at least first interior view (iv1, iv2) of the face and/or the head of the vehicle occupant (7), the position where the vehicle occupant (7) is located in relation to the at least first mirror display (30a, 30b, 30c).

12. The method according to claim 11, the method further comprising
- determining, based on the position where the vehicle occupant (7) is located in relation to the at least first mirror display (30a, 30b, 30c), the appearance of the at least first object (5a, 5b) in a mirror part (31a, 31b, 31c) of the at least first mirror display (30a, 30b, 30c); and
- displaying the at least first highlight (hl1, hl2) of the at least first object (5a, 5b) at an area in a display part (32a, 32b, 32c) of the at least first mirror display (30a, 30b, 30c) that is associated with the appearance of the at least a first object (5a, 5b) in the mirror part (31a, 31b, 31c) of the at least first mirror display (30a, 30b, 30c).

13. The method according to any of the claims 10-12, the method further comprising
- generating a visual effect that can be seen by the vehicle occupant (7) through a mirror part (31a, 31b, 31c) of the at least first mirror display (30a, 30b, 30c).

14. The method according to any of the claims 10-12, the method further comprising
- determining the presence of the at least first object (5a, 5b) using object recognition of identified objects in the at least first exterior view (ev1, ev2, ev3).

15. A computer program product (500) comprising a non-transitory computer readable medium, having thereon a computer program comprising program instructions, the computer program being loadable into a processing circuitry (102) and configured to cause execution of the method according to any of claims 10 through 14 when the computer program is run by the at least one processing circuitry (102).
